Europäisches Patentamt

European Patent Office

Office européen des brevets

(19)

(11) **EP 0 719 911 A1**

(12) **EUROPÄISCHE PATENTANMELDUNG**

(43) Veröffentlichungstag:
03.07.1996 Patentblatt 1996/27

(51) Int. Cl.[6]: **F01N 3/02**, F01N 9/00

(21) Anmeldenummer: 95118920.8

(22) Anmeldetag: 01.12.1995

(84) Benannte Vertragsstaaten:
AT DE FR IT NL SE

(30) Priorität: 30.12.1994 DE 4447283

(71) Anmelder: Firma J. Eberspächer
D-73730 Esslingen (DE)

(72) Erfinder:
• Pfister, Wolfgang
D-73732 Esslingen (DE)
• Blaschke, Walter
D-73732 Esslingen (DE)
• Wacker, Heinrich
D-73235 Weilheim (DE)
• Jung, Horst
D-73732 Esslingen (DE)

(54) **Vorrichtung zum Reinigen eines Partikelfilters für Dieselmotor-Abgasanlagen**

(57)  Eine Vorrichtung zum Regenerieren eines Partikelfilters für Dieselmotor-Abgasanlagen enthält eine Dosierpumpe (40) mit großer Variationsbreite des Volumendurchsatzes abhängig von der Arbeitsfrequenz der Pumpe. Über diese Dosierpumpe wird einem Brenner (12) der Regeneriervorrichtung Brennstoff abhängig von der Drehzahl des Dieselmotors (2) und abhängig von der am Partikelfilter (1) gemessenen Temperatur zugeführt. Bei einem Regeneriervorgang des Partikelfilters (10) kann dadurch auf einfache Weise auch bei laufendem Dieselmotor (2) eine in Grenzen konstante Abbrenntemperatur am Partikelfilter (10) aufrechterhalten werden, auch wenn bei zunehmender Drehzahl des Dieselmotors und entsprechend erhöhtem Abgas-Massenstrom die Temperatur am Partikelfilter (10) abfällt und bei erhöhter Motorlast die Temperatur dort zunimmt. Eine Steuerung (50) steuert die Dosierpumpe (40) nach Maßgabe einer Kennlinienschar an, in der jede Kennlinie von einem bestimmten Temperaturbereich in der Nähe der Soll-Abbrenntemperatur abhängt und gemäß der am Partikelfilter (10) gemessenen Temperatur ausgewählt wird. Jede Kennlinie definiert eine proportionale Abhängigkeit des Volumenstroms des Brennstoffs von der gemessenen Drehzahl des Dieselmotors (2).

FIG.1

EP 0 719 911 A1

**Beschreibung**

Die Erfindung betrifft eine Vorrichtung zum Reinigen eines Partikelfilters für Dieselmotor-Abgasanlagen, mit einem Brenner zur Aufheizen des Partikelfilters zu dessen thermischer Regeneration, wobei eine Brennstoffzuführeinrichtung im Brenner abhängig von der Drehzahl des Dieselmotors und der Temperatur am Partikelfilter eine variable Brennstoffmenge pro Zeiteinheit zuführt.

Partikelfilter für Dieselmotor-Abgasanlagen sollen den Ausstoß von Ruß oder Rußpartikeln in die Atmosphäre weitestgehend reduzieren. Zum Abfangen der Partikel in der Auspuffanlage des Dieselmotors werden als Partikelfilter in den Abgasleitungen keramische Monolithfilter, Keramikgarn-Wickelfilter und dergleichen installiert.

Da sich diese Filter bereits nach relativ geringer Betriebsdauer zusetzen, müssen die Filter gereinigt oder regeneriert werden. Dies geschieht durch Abbrennen der in dem Partikelfilter sitzenden Partikelansammlungen. Zu diesem Zweck müssen die Partikelfilter auf eine Temperatur von mindestens 600°C aufgeheizt werden. Dementsprechend muß der zur Regenerierung eingesetzte Brenner eine entsprechende Brennerleistung liefern.

Regeneriert man den Partikelfilter bei stillstehendem Dieselmotor, so läßt sich durch einfaches Überwachen der Temperatur am Partikelfilter die Brennerleistung so regeln, daß die Partikel bei der geeigneten Temperatur verbrannt werden.

Komplizierter wird das Reinigen des Partikelfilters bei sogenannten Vollstromregeneratoren; denn diese arbeiten auch bei laufendem Dieselmotor. Man kann leicht einsehen, daß das Regeln der Temperatur am Partikelfilter zur Aufrechterhaltung der gewünschten Abbrenntemperatur dadurch kompliziert wird, daß sich der Massenstrom in der Aupuffanlage (etwa proportional zur Dieselmotor-Drehzahl) ändert und außerdem die Temperatur des Abgases von der Motorlast abhängt. Die Abgastemperaturen sind bei stark belastetem Motor und aufgrund der dann erhöhten Kraftstoffeinspritzmenge heißer als bei wenig belastetem Motor.

Bei erhöhter Motordrehzahl und mithin erhöhtem Abgas-Massenstrom muß die Leistung des Brenners der Partikelfilter-Regeneriervorrichtung erhöht werden, und darüber hinaus muß berücksichtigt werden, daß bei hoher Abgastemperatur weniger Brennerleistung erforderlich ist als bei niedriger Abgastemperatur, weil bei hoher Abgastemperatur bereits ein Teil der für den Abbrennvorgang aufzubringenden Energie vom Abgasstrom selbst geliefert wird.

Es gibt nun eine Reihe von Vorschlägen, wie der Brenner der Vorrichtung zum Regenerieren von Partikelfiltern für Dieselmotor-Abgasanlagen zu regeln sei, um die von dem Brenner pro Zeiteinheit bereitzustellende Energie in Abhängigkeit der Dieselmotor-Drehzahl (entsprechend dem Abgas-Massenstrom) und der Temperatur am Partikelfilter (entsprechend der Motorlast) zu regeln.

Für den Betrieb des Brenners muß dieser mit Verbrennungsluft und Brennstoff in geeignetem Verhältnis versorgt werden. Während die Zufuhr von Verbrennungsluft relativ unproblematisch ist, erfordert die letztendlich die Brennerleistung bestimmende Regelung der Brennstoffzufuhr einigen Aufwand. Aus dem Stand der Technik ist es bekannt, einen solchen Brenner zum Regenerieren von Partikelfiltern von Dieselmotor-Abgasanlagen mit einem Einspritzventil zu versehen, wobei das Einspritzventil mit einem Impulszug-Signal angesteuert wird, bei dem die Impulsbreite der einzelnen Impulse nach Maßgabe der Temperatur am Partikelfilter und nach Maßgabe der Drehzahl des Dieselmotors gesteuert wird. Hierzu wird von einem Tabellenspeicher Gebrauch gemacht, in dem für jede mögliche Kombination von Drehzahl und Temperatur am Partikelfilter ein entsprechender Wert gespeichert wird, auf dessen Grundlage die Impulsbreite des das Einspritzventil steuernden Impulszugs ausgewählt wird.

Diese Regelung ist aufwendig.

Der Erfindung liegt die Aufgabe zugrunde, eine Vorrichtung zum Regenerieren eines Partikelfilters für Dieselmotor-Abgasanlagen anzugeben, bei dem die Brennstoffzufuhr zu dem Brenner mit einfachen Mitteln so geregelt wird, daß die für den Abbrennvorgang erforderliche Temperatur im Partikelfilter sicher aufrechterhalten wird.

Hierzu schlägt die Erfindung zwei alternative Lösungen vor. Gemäß einem ersten Lösungsvorschlag sieht die Erfindung vor, daß die Brennstoffzuführeinrichtung eine elektromagnetische Dosierpumpe aufweist, deren Fördermenge von ihrer Arbeitsfrequenz abhängt, und daß eine Steuerung für die Arbeitsfrequenz der Dosierpumpe etwa proportional zu der Drehzahl des Dieselmotors gemäß einer von mehreren Drehzahl-/Durchsatz-Kennlinien steuert, von denen jeweils eine aktuelle Kennlinie nach Maßgabe der Temperatur am Partikelfilter ausgewählt wird.

Die Dosierpumpe ist eine relativ leistungsstarke Dosierpumpe, die pro gegebenen Zeitintervall sowohl eine sehr kleine als auch eine sehr große Brennstoffmenge fördern kann. In der Steuerung ist ein Satz von Drehzahl-/Durchsatz-Kennlinien gespeichert, wobei jede einzelne Kennlinie für einen bestimmten Temperaturbereich der Temperatur am Partikelfilter die etwa proportionale Abhängigkeit der Dosierpumpen-Fördermenge von der Drehzahl des Dieselmotors angibt. Wird am Partikelfilter eine Temperatur festgestellt, die innerhalb eines gewissen Temperaturbereichs liegt, so ändert sich der Volumendurchsatz der Dosierpumpe etwa proportional zu der Motordrehzahl, das heißt also auch etwa proportional zu dem Abgas-Massenstrom in der Auspuffanlage. Diese proportionale Abhängigkeit des Volumendurchsatzes der Brennstoffdosierpumpe von der Drehzahl des Dieselmotors ist durch eine der Kennlinien vorgegeben. Ändert sich nun die Temperatur am Partikelfilter über ein bestimmtes Maß hinaus, so "springt" die Steuerung zu einer anderen Drehzahl-/Durchsatz-Kennlinie.

Befindet sich der Partikelfilter zum Beispiel in der Abgasanlage eines Dieselmotor-Kraftfahrzeugs und fährt dieses Kraftfahrzeug eine Steigung hoch, so wird der Motor stärker belastet. Die dementsprechend erhöhte Zufuhr von Dieselkraftstoff zu dem Dieselmotor bedingt eine Erhöhung der Abgastemperatur, die am Partikelfilter erfaßt wird. Übersteigt die Temperatur am Partikelfilter einen in der Steuerung eingestellten Schwellenwert, so "springt" die Steuerung auf eine Kennlinie, die einer Verringerung der Brennstoffzufuhr zu dem Brenner der Regeneriervorrichtung entspricht. Sinkt die Temperatur am Partikelfilter, so erfolgt ein Übergang zu einer Drehzahl-/Durchsatz-Kennlinie, die einer erhöhten Brennerleistung entspricht.

Während des oben geschilderten Ausregelvorgangs nach Maßgabe der Temperatur am Partikelfilter wird unabhängig davon natürlich die Arbeitsfrequenz der Dosierpumpe proportional zu der ermittelten Motordrehzahl des Dieselmotors gesteuert.

Der zweite erfindungsgemäße Vorschlag zur Lösung der obigen Aufgabe ist in einigen Punkten dem ersten Vorschlag ähnlich. Gemäß dem zweiten Vorschlag sieht die Erfindung vor, daß die Brennstoffzuführeinrichtung eine Pumpe und ein Magnetventil aufweist, und daß eine Steuerung die Öffnungstaktfrequenz des Magnetventils etwa proportional zu der Drehzahl des Dieselmotors steuert und die Öffnungsdauer des Magnetventils pro Takt (Anzugszeit) nach Maßgabe der Temperatur am Partikelfilter variiert. Die Pumpe stellt einen gewissen Druck am Magnetventil bereit. Das Magnetventil wird nun mit einem Steuersignal in Form eines Impulszugs angesteuert, so daß die im zeitlichen Mittel durch das Magnetventil strömende Brennstoffmenge etwa proportional zu der Frequenz oder Häufigkeit der einzelnen Impulse ist. Bei jedem Impuls oder Takt, den das Magnetventil empfängt, öffnet das Magnetventil für eine bestimmte Zeitspanne, so daß eine dementsprechend große Menge Brennstoff durchgelassen wird. Mehr Impulse pro Zeiteinheit bedeuten also eine entsprechende Erhöhung des Volumenstroms des Brennstoffs. Die Frequenz des Impulszugs hängt von der ermittelten Drehzahl des Dieselmotors ab.

Um nun die Motorlast zu berücksichtigen, die in einer entsprechenden Temperaturänderung am Partikelfilter Ausdruck findet, wird erfindungsgemäß die jeweilige Öffnungszeit des Magnetventils pro Takt variiert. Sinkt die Temperatur am Partikelfilter ab, so muß die Brennerleistung erhöht werden. Dementsprechend wird eine höhere Öffnungszeit des Magnetventils pro Takt, hier als Anzugszeit des Magnetventils bezeichnet, eingestellt. Insbesondere wird die Anzugszeit des Magnetventils von der Steuerung stufenweise geändert, wobei für jede Stufe eine Drehzahl-/Durchsatz-Kennlinie definiert ist und die Regelung der Brennerleistung durch Auswahl einer der Kennlinien erfolgt.

Ähnlich wie bei dem ersten, oben diskutierten Lösungsvorschlag erfolgt die Ansteuerung des Magnetventils stets mit einer Frequenz, die etwa proportional zu der ermittelten Drehzahl des Dieselmotors ist. Damit wird dem jeweiligen Massenstrom in der Auspuffanlage, welcher von der Drehzahl des Motors abhängt, Rechnung getragen. Um die Motorlast zu berücksichtigen, wird die am Partikelfilter gemessene Temperatur dazu herangezogen, auf die jeweils für den Regelvorgang geeignete Drehzahl-/Durchsatz-Kennlinie zu springen.

Bei dem Brenner kann es sich um einen einstufigen Brenner handeln. Wenn ein zweistufiger Brenner verwendet wird, dessen beiden Stufen separate Brennstoffzuführleitungen zugeordnet sind, so sieht die Erfindung vor, daß der einen Stufe unabhängig von der Temperatur am Partikelfilter Brennstoff etwa proportional zur Dieselmotor-Drehzahl zugeführt wird, während der anderen Stufe Brennstoff nicht nur proportional zur Dieselmotor-Drehzahl, sondern auch abhängig von der Temperatur am Partikelfilter zugemessen wird. Mit anderen Worten: Die oben diskutierten erfindungsgemäßen Vorschläge, wonach abhängig von der am Partikelfilter erfaßten Temperatur ein "Springen" von einer Kennlinie einer Kennlinien-Schar auf eine andere Kennlinie erfolgt, betrifft nur die Versorgung der zweiten Brennerstufe, während der ersten Brennerstufe stets eine "Grundmenge" Brennstoff pro Zeiteinheit zugeführt wird, welche die Temperatur am Partikelfilter unberücksichtigt läßt und lediglich proportional zur Dieselmotor-Drehzahl ist.

Die erwähnten Drehzahl-/Durchsatz-Kennlinien können in der Steuerung in Form einer Schar von Geradengleichungen in der Form

$$f_{Pumpe} = a\,(T_i)\cdot n + b\,(T_i)$$

mit der Drehzahl (n) als Variable und der Temperatur am Partikelfilter als Parameter definiert sein. Hierbei bedeutet $T_i$ jeweils einen Temperaturbereich, und wenn die am Partikelfilter erfaßte Temperatur einen gewissen Schwellenwert überschreitet oder unterschreitet, wird eine zugehörige Kennlinie durch die Steuerung ausgewählt.

Man kann die Scharen von Kennlinien auch in Form eines Tabellenspeichers realisieren.

Für die Verbrennungsluftzuführung des Brenners sieht die Erfindung vorzugsweise einen von der Drehzahl des Dieselmotors abhängigen Verbrennungsluft-Mengenstrom vor. Eine derartige Zumessung der Verbrennungsluft - ohne Berücksichtigung der Temperatur am Partikelfilter - wird als ausreichend angesehen.

Die erfindungsgemäße Regeneriervorrichtung kann sowohl bei stillstehendem Dieselmotor als auch bei laufenden Dieselmotor unabhängig von dem jeweiligen Betriebszustand des Dieselmotors arbeiten; demnach handelt es sich um einen sogenannten "Vollstromregenerator". In der vorliegenden Beschreibung der Erfindung nicht im einzelnen diskutiert sind weitere Merkmale einer Regeneriervorrichtung für Dieselmotor-Abgasanlagen, soweit sie zum Stand der Technik gehören. Beispielsweise gehört zu einer Vorrichtung zum Regenerieren von Partikelfiltern von Dieselmotor-Abgasanlagen auch eine Einrichtung, die den Grad der Verschmutzung oder Verstopfung des Partikelfilters - zum Beispiel durch Druckmessung - erfaßt, um gegebenenfalls einen Regeneriervorgang einzuleiten. Möglich ist die Anwendung der Erfindung auch bei zweiflutigen Intervall-Regeneriervorrichtungen, bei denen zwei parallel geschaltete Filter und eine Klappe zum wahlweisen Führen des Motorabgases in den ersten oder den zweiten Filter vorgesehen sind und jedem Filter ein eigener Brenner zugeordnet ist. Mit Hilfe der Klappe läßt sich das Abgas dem einen oder dem anderen Filter zuleiten, so daß jeweils der andere Filter regeneriert werden kann.

Im folgenden werden Ausführungsbeispiele der Erfindung anhand der Zeichnungen näher erläutert. Es zeigen:

Fig. 1 eine schematische Darstellung eines Kraftfahrzeug-Dieselmotors mit einem Abgas-Partikelfilter und eine Vorrichtung zum Regenerieren dieses Filters;

Fig. 2 eine Kennlinien-Schar für die Steuerung des Brenners der in Fig. 1 dargestellten Partikel-Regeneriervorrichtung;

Fig. 3 eine ähnliche Darstellung wie Fig. 1, jedoch mit einer gegenüber der Anlage nach Fig. 1 modifizierten Brennstoffzuführeinrichtung, und

Fig. 4 eine Kennlinienschar zum Steuern des Brenners der Partikel-Regeneriervorrichtung nach Fig. 3.

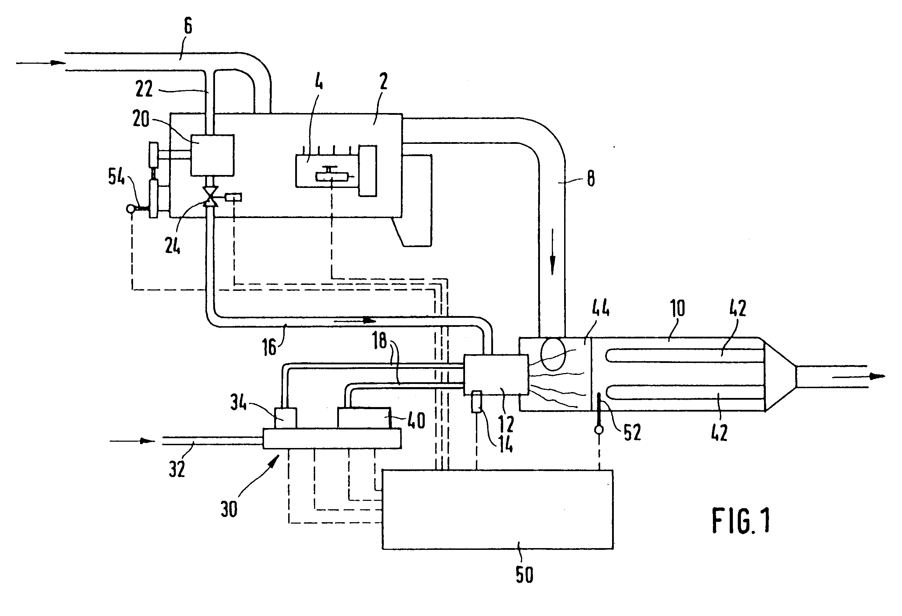

Ein in Fig. 1 im Verhältnis zu den übrigen Teilen übertrieben verkleinert dargestellter Dieselmotor 2 wird über eine Einspritzpumpe 4 mit Dieselkraftstoff gespeist, während er über eine Ansaugleitung 6 Verbrennungsluft erhält. Das Abgas des Dieselmotors 2 gelangt über eine Abgasleitung 8 durch einen Partikelfilter 10 ins Freie.

In dem Partikelfilter 10 sind mehrere Filterelemente 42 verteilt angeordnet. Stromaufwärts bezüglich der Filterelemente 42 besitzt der Partikelfilter einen Raum 44, in den tangential die Abgasleitung 8 mündet. Der Abgasstrom gelangt durch den Raum 44, wird von den Filterelementen 42 gereinigt und verläßt gereinigt den Partikelfilter 10.

Wenn von einer hier nicht näher dargestellten Einrichtung festgestellt wird, daß die Filterelemente 42 des Partikelfilters 10 so stark von Partikeln zugesetzt sind, daß eine Reinigung erforderlich ist, wird von einer Steuerung 50 ein Regeneriervorgang eingeleitet.

Das Regenerieren des Partikelfilters 10 mit den darin enthaltenen Filterelementen 42 erfolgt durch Abbrennen der Partikel bei einer Abbrenntemperatur von über 600°C. Hierzu ist stirnseitig dem Partikelfilter 10 gegenüberliegend ein Brenner 12 angebaut. Der Brenner enthält eine Brennkammer und eine elektrische Zündeinrichtung 14. Dem Brenner 12 wird über eine Leitung 16 Verbrennungsluft und über eine Zweifachleitung 18 Brennstoff zugeführt. Bei dem Brennstoff handelt es sich hier um Dieselöl.

An den Dieselmotor 2 ist ein Kompressor 20 angebaut, der mechanisch von der Kurbelwelle des Dieselmotors 2 angetrieben wird. Der Kompressor 20 saugt über eine Nebenleitung 22 Luft aus der Ansaugleitung des Dieselmotors an und ist ausgangsseitig an die Verbrennungsluftleitung 16 angeschlossen. In die Leitung 16 ist ein elektrisches Stellventil 24 eingefügt.

Für die Brennstoffzufuhr zu dem Brenner 12 sorgt eine Brennstoffzuführeinrichtung 30, die eingangsseitig über eine Brennstoffleitung 32 mit dem Kraftstofftank des Kraftfahrzeugs verbunden ist und die ausgangsseitig über eine erste Dosierpumpe 34 und eine zweite Dosierpumpe 40 an jeweils eine Brennstoffleitung 18 angeschlossen ist.

Bei dem Brenner 12 handelt es sich um einen zweistufigen Brenner, dessen erster Stufe Brennstoff durch die Dosierpumpe 34 und dessen zweiter Stufe Brennstoff von der Dosierpumpe 40 zugeführt wird.

Die beiden Dosierpumpen 34 und 40 werden von der Steuerung 50 angesteuert und arbeiten mit einer bestimmten Arbeitsfrequenz, welcher ihre jeweilige Förderleistung entspricht. Bei der Dosierpumpe 34 handelt es sich um eine relativ kleine Dosierpumpe, das heißt um eine Dosierpumpe mit relativ geringer Förderleistung. Abhängig von der durch die Steuerung 50 vorgegebene Arbeitsfrequenz liefert die Dosierpumpe 34 pro Zeiteinheit eine bestimmte Menge Brennstoff an die erste Stufe des Brenners 12. Die Arbeitsfrequenz hängt dabei ab von der Drehzahl n des Dieselmotors 2, wie dies unten noch näher erläutert wird.

Die Dosierpumpe 40 ist eine relativ groß dimensionierte Dosierpumpe mit einem großen Variationsbereich. Die Dosierpumpe 40 kann bei entsprechend niedriger Arbeitsfrequenz eine sehr geringe Menge Brennstoff pro Zeiteinheit liefern, kann aber auch bei entsprechend hoher Arbeitsfrequenz einen entsprechend hohen Volumendurchsatz bewältigen.

Über gestrichelt eingezeichnete Steuer- und Signalleitungen sind mit dem Steuergerät 50 im einzelnen verbunden:

a) ein Temperaturfühler 52, der die Gastemperatur in oder an dem Partikelfilter 10 im Bereich der Filterelemente 42 erfaßt;

b) ein Drehzahlsensor 54, der die Drehzahl des Dieselmotors 2 an dessen Kurbelwelle erfaßt;

c) die Einspritzpumpe 4 des Dieselmotors, die den Lastzustand des Dieselmotors 2 erfaßt, wobei eine große Kraftstoff-Einspritzmenge pro Zeiteinheit eine hohe Motorlast und eine geringe Einspritzmenge eine geringe Motorlast bedeutet;

d) die elektrische Zündeinrichtung 14 des Brenners 12;

e) die Brennstoff-Dosierpumpen 34 und 40; und

f) das Ventil 24 in der Luftleitung 16.

Wie erwähnt, ist die Steuerung 50 mit der Einspritzpumpe 4 verbunden, um ein für die Last des Motors repräsentatives Signal in der Steuerung 50 zur Verfügung zu haben. Die hier beschriebene Variante der Steuerung des Brenners 12 zum Regenerieren des Partikelfilters 10 kann allerdings auch ohne dieses Signal von der Einspritzpumpe 4 auskommen.

Die folgenden Erläuterungen sollen sich ausschließlich auf die Regenerationsphase des Partikelfilters beziehen, wobei die Regeneration bei laufendem Dieselmotor 2 erfolgt.

Zum Regenerieren des Partikelfilters 10 wird der Brenner 12 mit Hilfe der Zündeinrichtung 14 gezündet, während dem Brenner 12 über die Brennstoffzuführeinrichtung 30 Brennstoff und über die Luftleitung 16 Verbrennungsluft zugeführt werden.

Zum Regenerieren der Filterelemente 42 ist im Bereich des Partikelfilters eine Mindesttemperatur von etwa 600°C erforderlich. Die hier verwendete Regelung des Brenners 12 ist so ausgebildet, daß eine Temperatur in der Nähe von 650° im Bereich des Temperaturfühlers 52 eingeregelt wird.

Wenn sich die Drehzahl des Dieselmotors 2 erhöht, erhöht sich dementsprechend auch der Massenstrom in der Abgasleitung 8, das heißt, bei gegebener Brennerleistung wird die Temperatur am Temperaturfühler 52 niedriger. Um dies zu berücksichtigen, muß die Leistung des Brenners 12 erhöht werden. Dies wird dadurch erreicht, daß der Betrieb der beiden Dosierpumpen 34 und 40 abhängig von der ermittelten Drehzahl n des Dieselmotors 2 durch die Steuerung 50 gesteuert wird.

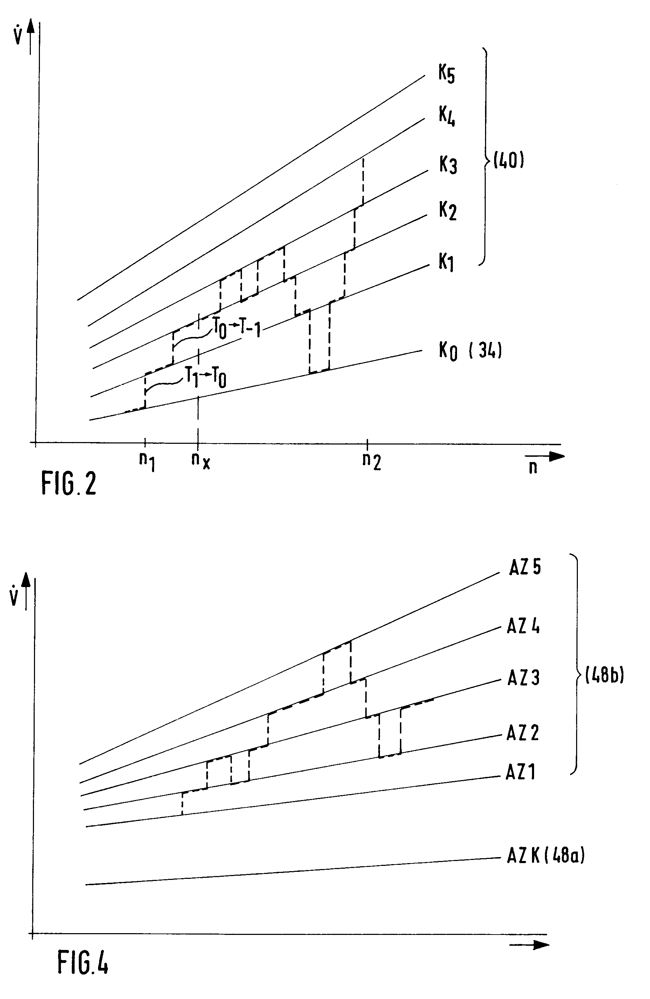

**Fig. 2** zeigt in grafischer Darstellung die Abhängigkeit des am Brenner wirksamen Volumenstroms V in Abhängigkeit der Drehzahl n des Dieselmotors 2. Eine untere Gerade $K_0$ gibt die Abhängigkeit des Volumendurchsatzes V von der Motordrehzahl n für die relativ klein bemessene Brennstoff-Dosierpumpe 34 an. Die Dosierpumpe 34 führt der ersten Stufe des Brenners 12 entsprechend dieser Kennlinie $K_0$ Brennstoff in einer Menge zu, die proportional zur Drehzahl n ist.

Der Betrieb der größeren Brennstoff-Dosierpumpe 40 wird von der Steuerung 50 nach Maßgabe einer Schar von Kennlinien $K_1$... $K_5$ gesteuert. Jede einzelne der Kennlinien $K_1$ bis $K_5$ definiert die Abhängigkeit des von der Dosierpumpe 40 gelieferten Volumenstroms V von der jeweiligen Drehzahl n des Dieselmotors 2. Welche der Kennlinien $K_1$ bis $K_5$ nun von der Steuerung 50 für den Betrieb der Dosierpumpe 40 ausgewählt wird, hängt ab von der von dem Temperaturfühler 52 am Partikelfilter 10 ermittelten Temperatur. Mit anderen Worten: Die Regelung 50 springt abhängig von der vom Temperaturfühler 52 ermittelten Temperatur von einer der Kennlinien $K_1$ bis $K_5$ auf eine andere Kennlinie der Kennlinien $K_1$ bis $K_5$, wenn die gemessene Temperatur einen in der Steuerung 50 gespeicherten Schwellenwert für die jeweilige Kennlinie über- bzw. unterschreitet.

In **Fig. 2** ist durch eine gestrichelte Linie die Auswahl der Arbeitsfrequenz für die Dosierpumpe 40 abhängig von der Drehzahl n des Dieselmotors 2 und abhängig von der vom Temperaturfühler 52 festgestellten Temperatur T dargestellt, wobei der Verlauf der gestrichelten Linie vom linken unteren Ende bei der Drehzahl n1 zum rechten oberen Ende bei der Drehzahl n2 einer bestimmten Zeitspanne entspricht.

Angenommen, der Dieselmotor laufe mit einer Drehzahl $n_1$, wobei der Temperaturfühler 52 am Partikelfilter 10 eine Temperatur T feststelle. In der Steuerung 50 sind mehrere Tempertur-Schwellenwerte oberhalb und unterhalb der Soll-Temperatur von 650°C eingestellt. Wenn man nun weiterhin annimmt, daß die derzeit von dem Temperturfühler 52 gemessene Temperatur zunächst in einem Temperaturbereich $T_1$ liegt und - beispielsweise durch Verringerung der Motorlast - eine Temperaturabsenkung in einen Temperaturbereich $T_0$ unterhalb eines gewissen Schwellenwerts erfolgt, so schaltet die Steuerung 50 die Dosierpumpe 40 ein, wobei der Betrieb der Dosierpumpe abhängig von der Motordrehzähl n entsprechend der in **Fig. 2** gezeigten Kennlinie $K_1$ erfolgt. Bei dem in **Fig. 2** gewählten Beispiel wird angenommen, daß sich die Drehzähl langsam von einer relativ niedrigen Drehzähl $n_1$ auf eine relativ hohe Drehzahl $n_2$ ändert. Demnach ist nach einer gewissen Zeitspanne die Drehzahl auf einen Wert oberhalb von $n_1$ angestiegen. Wenn man nun weiterhin annimmt, daß sich dann die von dem Temperaturfühler 52 ermittelte Temperatur am Partikelfilter 10 noch weiter abgesenkt hat, beispielsweise in einen unter einem weiteren Schwellenwert liegenden Temperturbereich $T_{-1}$ abgesunken ist, so springt die Steuerung 50 auf die nächste Kennlinie $K_2$, so daß anschließend an diesen "Sprung" dem Brenner 12 Brennstoff zugeführt wird, der sowohl für die Dosierpumpe 34 als auch die Dosierpumpe 40 von der Drehzahl n abhängt, wobei aber diese Abhängigkeit bezüglich der Dosierpumpe 34 durch die Kennlinie $K_0$ bestimmt wird, während der Volumendurchsatz durch die Dosierpumpe 40 von der Kennlinie $K_2$ bestimmt wird. Der gesamte dem Brenner 12 zugeführte Volumenstrom bei einer Drehzahl $n_x$ entspricht also der Summe des Volumenstroms gemäß Kennlinie $K_0$ für die Drehzahl $n_x$ und des Volumenstroms entsprechend der Kennlinie $K_2$ für diese Drehzahl $n_x$.

Fährt man auf der gestrichelten Linie in **Fig. 2** weiter nach rechts fort, so ergeben sich weitere Sprünge von der Kennlinie $K_2$ zu der Kennlinie $K_3$, dann wieder zurück zu Kennlinie $K_2$, und so weiter. Durch das Springen auf höhere Kennlinien für den Betrieb der Dosierpumpe 40 wird also der Volumenstrom V erhöht, dementsprechend erhöht sich die Brennerleistung, was letztendlich zu einer Erhöhung der Temperatur am Partikelfilter 10 führt. Ist dort die Temperatur zu hoch, wird auf niedrigere Kennlinien gewechselt, so daß dementsprechend die Brennerleistung zurückgenommen wird.

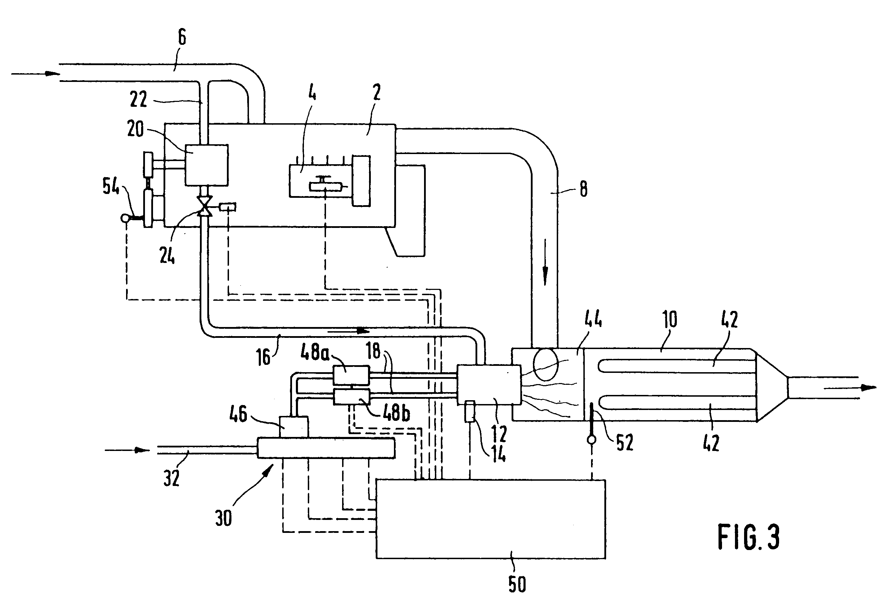

**Fig. 3** zeigt ähnlich wie **Fig. 1** einen Kraftfahrzeug-Dieselmotor mit einem Partikelfilter und einer Regeneriereinrichtung für den Partikelfilter, wobei im folgenden jedoch nur die unterschiedlichen Merkmale bezüglich **Fig. 1** angesprochen werden sollen.

Während einer Ausführungform nach **Fig. 1** zwei verschiedene Dosierpumpen 34 und 40 vorhanden sind, besitzt die Benzinzuführeinrichtung 30 gemäß der Ausführungsform nach **Fig. 3** lediglich eine Pumpe 46, die in den beiden Brennstoffleitungen 18 einen bestimmten Brennstoffdruck erzeugt. In jede der beiden Leitungen 18 ist ein Magnet-Taktventil 48a bzw. 48b eingefügt. Beide Magnetventile 48a und 48b sind über Steuerleitungen mit der Steuerung 50 verbunden.

Das Magnetventil 48a wird von der Steuerung 50 mit einem Impulszug-Signal angesteuert, dessen Frequenz die Durchflußmenge Brennstoff durch das Magnetventil 48a pro Zeiteinheit definiert. Bei jedem empfangenen Impuls öffnet das Magnetventil 48a für eine bestimmte Zeitspanne, und während dieser Zeitspanne wird bei gegebenem eingangsseitigem Druck eine bestimmte Menge Brennstoff durchgelassen, die über die angeschlossene Brennstoffleitung 18 zu der ersten Stufe des Brenners 12 gelangt.

Die hier als Anzugszeit bezeichnete Öffnungszeit des Magnetventils 48 pro empfangenem Taktimpuls ist konstant, so daß der Volumenstrom V durch dieses Magnetventil 48a proportional zur Taktfrequenz ist. Die Steuerung 50 stellt diese Taktfrequenz proportional zur ermittelten Drehzahl des Dieselmotors ein. Die zugehörige Kennlinie ist in **Fig. 4** unten mit AZK bezeichnet. Bei zunehmender Drehzahl n nimmt der Volumenstrom V durch das Magnetventil 48a etwa proportional zu.

Das Taktventil 48b wird von der Steuerung 50 in ähnlicher Weise angesteuert wie das Taktventil 48a, wobei das Magnetventil 48b der zweiten Stufe des Brenners Brennstoff zuführt, jedoch nicht nur in einer zu der Drehzahl des Dieselmotors proportionalen Menge, sondern auch in Abhängigkeit der von dem Temperaturfühler 52 am Partikelfilter gemessenen Tempertur.

Das Magnetventil 48b unterscheidet sich von dem Magnetventil 48a dadurch, daß seine Anzugszeit, das heißt seine Öffnungszeit pro zugeführtem Taktimpuls, durch die Steuerung 50 variiierbar ist. Die Steuerung 50 stellt die Anzugszeit des Magnetventils 48b stufenweise ein, abhängig davon, in welchen von mehreren Temperaturbereichen die von dem Temperaturfühler 52 gemessene Temperatur T fällt. Liefert der Temperaturfühler 52 an die Steuerung 50 ein Meßsignal, welches einer relativ niedrigen Temperatur unterhalb der Soll-Temperatur entspricht, so wird dies von der Steuerung 50 durch entsprechende Auswahl einer geeigneten Anzugszeit des Magnetventils 48b berücksichtigt. Stellt der Temperaturfühler 52 zum Beispiel fest, daß die Temperatur T am Partikelfilter 10 bei Unterschreitung eines bestimmten Schwellenwerts (in der Steuerung 50 sind mehrere Schwellenwerte eingestellt) in einen bestimmten Temperaturbereich gelangt, so veranlaßt die Steuerung 50 zur Kompensation dieses Temperaturabfalls eine Verlängerung der Anzugszeit.

In **Fig. 4** sind mehrere Kennlinien AZ1 bis AZ5 für abgestuft geänderte Anzugszeiten des Magnetventils 48b dargestellt.

Die Kennlinie AZ1 für das Magnetventil 48b ist ebenso wie alle anderen Kennlinien eine Gerade, die festlegt, in welchem proportionalen Verhältnis sich der Volumenstrom V abhängig von der gemessenen Drehzahl n des Dieselmotors 2 ändert. Dabei bedeutet die Kennlinie AZ1 einen relativ geringen Volumenstrom aufgrund kurzer Anzugszeit des Magnetventils 48b, höhere Kennlinien bedeuten längere Anzugszeiten, und entsprechend bedeutet die Kennlinie AZ5 die größte mögliche Anzugszeit des Magnetventils 48b. Wenn die Steuerung 50 da Magnetventil 48b entsprechend der Kennlinie AZ5 ansteuert, liefert das Magnetventil 48b an die zweite Stufe des Brenners 12 einen relativ großen Volumenstrom, womit eine relativ große Brennerleistung einhergeht. Der höchste Volumenstrom wird bei der Anzugszeit entsprechend der Kennlinie AZ5 bei hohen Drehzahlen geliefert.

Durch eine gestrichelte Linie ist in **Fig. 4** das Springen der Steuerung 5 von einer Kennlinie auf eine andere Kennlinie angedeutet.

Während bei einer Ausführungsform nach **Fig. 1** eine Dosierpumpe (die Dosierpumpe 40) von der Steuerung 50 abhängig von der Drehzahl n des Dieselmotors und abhängig von der Temperatur T am Partikelfilter gesteuert wird, erfolgt gemäß **Fig. 3** und **4** die Steuerung der Brennerleistung über das Magnetventil 48b, dessen Frequenz in Abhängigkeit von der gemessenen Drehzahl n des Dieselmotors geändert wird, und dessen Anzugszeit stufenweise abhängig davon eingestellt wird, in welchen von mehreren Temperaturbereichen die von dem Temperaturfühler am Partikelfilter 10 gemessene Temperatur fällt.

Zur Realisierung dieser Steuerung auf der Grundlage einer Kennlinienschar kann in der Steuerung 50 jeweils eine Berechnung entsprechend einer Geradengleichung vorgenommen werden. Diese Geradengleichung hat dann beispielsweise die Formel

$$f_{Pumpe} = a\,(T_i)\cdot n + B(T_i)$$

mit

| | |
|---|---|
| $f_{Pumpe}$ | = Arbeitsfrequenz der Dosierpumpe 40, |
| a | = Steigung der Geraden jeweils einer Kennlinie |
| b | = Schnittpunkt der Geraden mit der Ordinate |
| n | = Drehzahl des Dieselmotors 2 |
| $T_i$ | = einen Temperaturbereich in der Nähe der Soll-Temperatur des Partikelfilters beim Regeneriervorgang. |

Aus der obigen Gleichung ergibt sich, daß für einen gegebenen Temperaturbereich $T_i$ jeweils eine gesonderte Geradengleichung definiert ist, das heißt die Steigung a und der Schnittpunkt b mit der Ordinate sind für jeden einzelnen Temperaturbereich $T_i$ definiert.

Eine ähnliche Geradengleichung läßt sich für die Schar von Kennlinien gemäß **Fig. 4** aufstellen. Dabei ist dann nicht die Arbeitsfrequenz der Pumpe, sondern die Taktfrequenz des Magnetventils 48b durch eine Geradengleichung definiert, wobei die Werte a und b dann zu einer entsprechenden Anzugszeit des Magnetventils gehören.

**Patentansprüche**

1. Vorrichtung zum Regenerieren eines Partikelfilters für Dieselmotor-Abgasanlagen, mit einem Brenner (12) zum Aufheizen des Partikelfilters (10) zu dessen thermischer Regeneration, wobei eine Brennstoffzuführeinrichtung (30) dem Brenner (12) abhängig von der Drehzahl des Dieselmotors (2) und der Temperatur am Partikelfilter (10) eine variable Brennstoffmenge pro Zeiteinheit zuführt, **dadurch gekennzeichnet,** daß die Brennstoffzuführeinrichtung (30) eine elektrische Dosierpumpe (40) aufweist, deren Fördermenge von ihrer Arbeitsfrequenz abhängt, und daß eine Steuerung (50) die Arbeitsfrequenz der Dosierpumpe (40) etwa proportional zu der Drehzahl des Dieselmotors (2) gemäß einer von mehreren Drehzahl-/Durchsatz-Kennlinien ($K_1$ - $K_5$) steuert, von denen jeweils eine aktuelle Kennlinie nach Maßgabe der Temperatur am Partikelfilter (10) ausgewählt wird.

2. Vorrichtung zum Regenerieren eines Partikelfilters für Dieselmotor-Abgasanlagen, mit einem Brenner (12) zum Aufheizen des Partikelfilters (10) zu dessen thermischer Regeneration, wobei eine Brennstoffzuführeinrichtung (30) dem Brenner (12) abhängig von der Drehzahl des Dieselmotors (2) und der Temperatur am Partikelfilter (10) eine variable Brennstoffmenge pro Zeiteinheit zuführt, **dadurch gekennzeichnet,** daß die Brennstoffzuführeinrichtung eine Pumpe (46) und ein Magnetventil (48b) aufweist, und daß eine Steuerung die Öffnungstaktfrequenz des Magnetventils (48b) etwa proportional zu der Drehzahl des Dieselmotors (2) steuert und die Öffnungsdauer des Magnetventils (48b) pro Takt (Anzugszeit) nach Maßgabe der Temperatur am Partikelfilter (10) variiert.

3. Vorrichtung nach Anspruch 2, **dadurch gekennzeichnet,** daß die Anzugszeit des Magnetventils (48b) von der Steuerung (50) stufenweise geändert wird, wobei für jede Stufe eine Drehzahl-/Durchsatz-Kennlinie (AZ1 - AZ5) definert ist und die Regelung der Brennerleistung durch Auswahl einer der Kennlinien erfolgt.

4. Vorrichtung nach einem der Ansprüche 1 bis 3, **dadurch gekennzeichnet,** daß der Brenner ein zweistufiger Brenner (12) ist, dessen erster Stufe unabhängig von der Temperatur am Partikelfiler (10) Brenntoff etwa proportional zur Dieselmotor-Drehzahl (n) zugeführt wird, und dessen zweiter Stufe Brennstoff auch abhängig von der Temperatur am Partikelfilter (10) zugemessen wird.

5. Vorrichtung nach irgendeinem der Ansprüche 1 bis 4, **dadurch gekennzeichnet,** daß die Steuerung (50) einen Satz von Drehzähl-/Durchsatz-Kennlinien in Form einer Schar von Geradengleichungen mit der Drehzahl (n) als Variable und einen Temperaturbereich als Parameter definiert.

6. Vorrichtung nach einem der Ansprüche 1 bis 4, **dadurch gekennzeichnet,** daß Drehzahl-/Durchsatz-Kennlinien in Form einer Tabelle gespeichert sind.

7. Vorrichtung nach irgendeinem der Ansprüche 1 bis 6, **dadurch gekennzeichnet,** daß eine Verbrennungsluftzuführeinrichtung für den Brenner (12) vorgesehen ist, die einen von der Drehzahl des Dieselmotors (2) abhängigen Verbrennungsluft-Mengenstrom zuführt.

FIG.1

FIG.2

FIG.4

FIG.3

**Europäisches Patentamt**

# EUROPÄISCHER RECHERCHENBERICHT

Nummer der Anmeldung

EP 95 11 8920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 8 no. 152 (M-309) ,14.Juli 1984 & JP-A-59 049311 (MITSUBISHI DENKI KK) 21.März 1984, * Zusammenfassung * | 1,6 | F01N3/02 F01N9/00 |
| | --- | | |
| A | DE-A-38 29 491 (KLÖCKNER-HUMBOLDT-DEUTZ AG) * Spalte 2, Zeile 47 - Spalte 3, Zeile 47; Abbildungen * | 2,3 | |
| | --- | | |
| A | EP-A-0 532 031 (EBERSPÄCHER) * Spalte 6, Zeile 41 - Spalte 7, Zeile 46; Abbildung * | 1,4 | |
| | ----- | | |

**RECHERCHIERTE SACHGEBIETE (Int.Cl.6)**

F01N

Der vorliegende Recherchenbericht wurde für alle Patentansprüche erstellt

| Recherchenort | Abschlußdatum der Recherche | Prüfer |
|---|---|---|
| DEN HAAG | 2.April 1996 | Sideris, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P04C03)